# EUROPEAN PATENT APPLICATION

(11) **EP 4 080 708 A1**
(43) Date of publication of application: **26.10.2022**
(21) Application number: 22169091.0
(22) Date of filing: 20.04.2022
(51) Int. Cl.: H02J 3/26, H02J 7/00

(54) **AC BATTERY PACK WITH INTEGRATED ELECTRONICS AND COOLING**

(30) Priority: 24.04.2021 US 202163179195 P
(71) Applicant: Carrier Corporation, Palm Beach Gardens, FL 33418 (US)
(72) Inventor: SHE, Xu, Bloomfield 06002 (US)
(74) Representative: Dehns

(57) **Abstract**

A transport refrigeration unit 22 is configured to provide conditioned air to a refrigerated cargo space 119 and includes: an AC battery pack 400 configured to store and convert DC electricity to AC electricity and provide the AC electricity to power the transport refrigeration unit 22 as three phase electrical power, the AC battery pack 400 includes: a first phase group 410 including a first plurality of battery modules 440, the first phase group 410 being configured to provide the AC electricity in a first phase; a second phase group 420 including a second plurality of battery modules 440, the second phase group 420 being configured to provide the AC electricity in a second phase; and a third phase group 430 including a third plurality of battery modules 440, the third phase group 430 being configured to provide the AC electricity in a third phase. The first phase, the second phase, and the third phase are each shaped as a stair step sine wave.

## Description

### BACKGROUND

The embodiments herein generally relate to transport refrigeration and more specifically, the energy source of transport refrigeration units.

Refrigerated vehicles and trailers are commonly used to transport perishable goods. A transport refrigeration unit is commonly mounted to the vehicles or to the trailer in operative association with a cargo space defined within the vehicles or trailer for maintaining a controlled temperature environment within the cargo space.

Conventionally, transport refrigeration units used in connection with refrigerated vehicles and refrigerated trailers include a refrigerant compressor, a condenser with one or more associated condenser fans, an expansion device, and an evaporator with one or more associated evaporator fans, which are connected via appropriate refrigerant lines in a closed refrigerant flow circuit. Air or an air/gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On many commercially available transport refrigeration units the compressor, and typically other components of the transport refrigeration unit, is powered during transit by a prime mover, either through a direct mechanical coupling or a belt drive. Alternatively, the transport refrigeration unit may be electrically powered (e.g., using an alternating (AC) synchronous generator that generates AC power). The generated AC power is typically used to power an electric motor for driving the refrigerant compressor, and other components of the transport refrigeration unit. In a different electrically powered transport refrigeration unit, the AC generator may be replaced with an AC battery pack to provide power to the loads. Traditionally, the AC battery pack includes a centralized power conversion unit, which makes it difficult for co-located cooling (of the power electronics and the power conversion unit), creates a high harmonic output waveform (drives need for big sine filter), and occupies a large space. Accordingly, an improved electrically driven refrigeration system is desired.

### BRIEF DESCRIPTION

According to one aspect, a transport refrigeration unit is provided. The transport refrigeration unit is configured to provide conditioned air to a refrigerated cargo space, the transport refrigeration unit including: an AC battery pack configured to store DC electricity and convert the DC electricity to AC electricity and provide the AC electricity to power the transport refrigeration unit as three phase electrical power, wherein the AC battery pack includes: a first phase group including a first plurality of battery modules, the first phase group being configured to provide the AC electricity in a first phase; a second phase group including a second plurality of battery modules, the second phase group being configured to provide the AC electricity in a second phase; and a third phase group including a third plurality of battery modules, the third phase group being configured to provide the AC electricity in a third phase, wherein the first phase, the second phase, and the third phase are each shaped as a stair step sine wave.

Optionally, the transport refrigeration system may include that each battery module of at least one of the first plurality of battery modules, the second plurality of battery modules, and the third plurality of battery modules, respectively, include a battery management module including: a DC-to-AC inverter configured to convert the DC electricity to the AC electricity; and a battery management system configured to control output of the AC electricity from the DC-to-AC inverter to the transport refrigeration unit.

Optionally, the transport refrigeration system may include a coolant circulation system in thermal communication with at least one battery management module, wherein the coolant circulation system is configured to remove heat from the at least one battery management module using coolant from the transport refrigeration unit.

Optionally, the transport refrigeration system may include that the coolant circulation system is in thermal communication with each battery module of the first plurality of battery modules, each battery module of the second plurality of battery modules, and each battery module of the third plurality of battery modules.

Optionally, the transport refrigeration system may include that each battery management module is co-located with its respective battery module within the AC battery pack.

Optionally, the transport refrigeration system may include that the first plurality of battery modules are connected to each other in series.

Optionally, the transport refrigeration system may include that each battery module of the first plurality of battery modules, the second plurality of battery modules, and the third plurality of battery modules, respectively, includes a battery management module including: a DC-to-AC inverter configured to convert the DC electricity to the AC electricity; and a battery management system configured to control output of the AC electricity from the first DC-to-AC inverter to the transport refrigeration unit.

Optionally, the transport refrigeration system may include a coolant circulation system in thermal communication with battery management modules, wherein the coolant circulation system is configured to remove heat from the battery management modules using coolant from the transport refrigeration unit.

Optionally, the transport refrigeration system may include that the coolant circulation system is in thermal communication with each battery module of the first plurality of battery modules, each battery module of the second plurality of battery modules, and each battery module of the third plurality of battery modules.

Optionally, the transport refrigeration system may include that each battery management module is co-located with its respective battery modules within the AC battery pack.

Optionally, the transport refrigeration system may include that the first plurality of battery modules are connected to each other in series, the second plurality of battery modules are connected to each other in series, and the third plurality of battery modules are connected to each other in series.

According to another aspect, there is provided an AC battery pack configured to store DC electricity and convert the DC electricity to AC electricity and provide the AC electricity to at least one load as three phase electrical power, the AC battery pack including: a first phase group including a first plurality of battery modules, the first phase group being configured to provide the AC electricity in a first phase; a second phase group including a second plurality of battery modules, the second phase group being configured to provide the AC electricity in a second phase; and a third phase group including a third plurality of battery modules, the third phase group being configured to provide the AC electricity in a third phase, wherein the first phase, the second phase, and the third phase are each shaped as a stair step sine wave.

Optionally, the transport refrigeration system may include that each battery module of at least one of the first plurality of battery modules, the second plurality of battery modules, and the third plurality of battery modules, respectively, include a battery management module including: a DC-to-AC inverter configured to convert the DC electricity to the AC electricity; and a battery management system configured to control output of the AC electricity from a DC-to-AC inverter to the transport refrigeration unit.

Optionally, the transport refrigeration system may include a coolant circulation system in thermal communication with at least one battery management module, wherein the coolant circulation system is configured to remove heat from the at least one battery management module using a coolant.

Optionally, the transport refrigeration system may include that the coolant circulation system is in thermal communication with each battery module of the first plurality of battery modules, each battery module of the second plurality of battery modules, and each battery module of the third plurality of battery modules.

Optionally, the transport refrigeration system may include that each battery management module is co-located with its respective battery module within the AC battery pack.

Optionally, the transport refrigeration system may include that the first plurality of battery modules are connected to each other in series, the second plurality of battery modules are connected to each other in series, and the third plurality of battery modules are connected to each other in series.

According to another aspect, a method of operating a transport refrigeration unit is provided. The method includes: providing conditioned air to a refrigerated cargo space using the transport refrigeration unit; storing DC electricity to power the transport refrigeration unit using an AC battery pack; converting the DC electricity to AC electricity; and providing the AC electricity to power the transport refrigeration unit as three phase electrical power, wherein the AC battery pack includes: a first phase group including a first plurality of battery modules, the first phase group being configured to provide the AC electricity in a first phase; a second phase group including a second plurality of battery modules, the second phase group being configured to provide the AC electricity in a second phase; and a third phase group including a third plurality of battery modules, the third phase group being configured to provide the AC electricity in a third phase, wherein the first phase, the second phase, and the third phase are each shaped as a stair step sine wave.

Optionally, the transport refrigeration system may include that each battery module of at least one of the first plurality of battery modules, the second plurality of battery modules, and the third plurality of battery modules, respectively, include a battery management module including: a DC-to-AC inverter configured to convert the DC electricity to the AC electricity; and a battery management system configured to control output of the AC electricity from the DC-to-AC inverter to the transport refrigeration unit.

Optionally, the transport refrigeration system (and/or method of operating a transport refrigeration unit) may include removing heat from at least one battery management module using coolant from the transport refrigeration unit.

Technical effects of preferred embodiments may include collocating a plurality of battery modules and battery management modules within an AC battery pack of an transport refrigeration unit and organizing the battery modules into three phase groups to produces a stair step sine wave output voltage.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike. Certain exemplary embodiments will now be described in greater detail by way of example only and with reference to the accompanying drawings in which:
FIG. 1 is a schematic illustration of a refrigerated truck with a transport refrigeration unitlosure;
FIG. 2 is an enlarged schematic illustration of a transport refrigeration unit;
FIG. 3 is an enlarged schematic illustration an AC battery pack;
FIG. 4 illustrates a schematic wiring diagram of the AC battery pack of FIG. 4;
FIG. 5 illustrates an example of a voltage output generated by the first phase of the AC battery pack; and
FIG. 6 is a flow process illustrating a method of operating the transport refrigeration unit of FIGS. 1-5.

### DETAILED DESCRIPTION

A detailed description of one or more embodiments of the disclosed apparatus and method are presented herein by way of exemplification and not limitation with reference to the Figures.

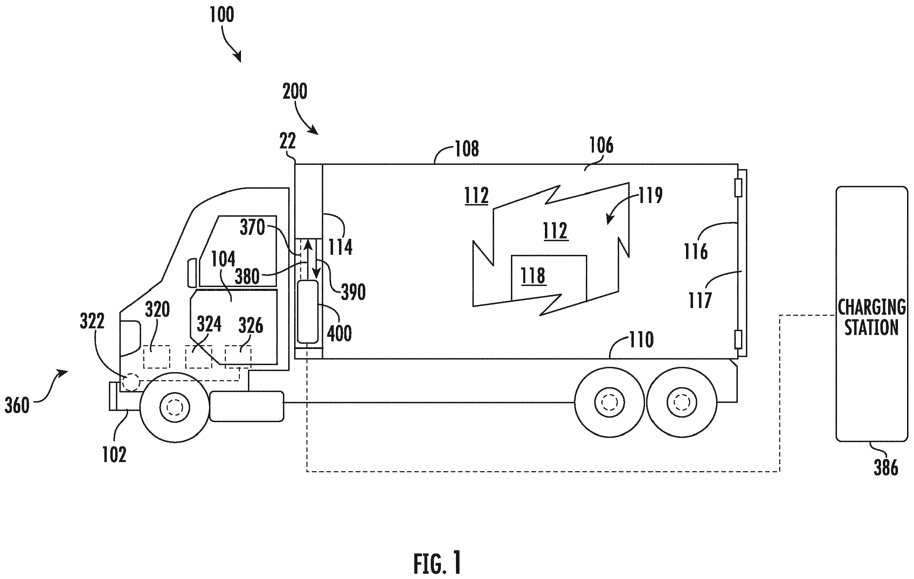

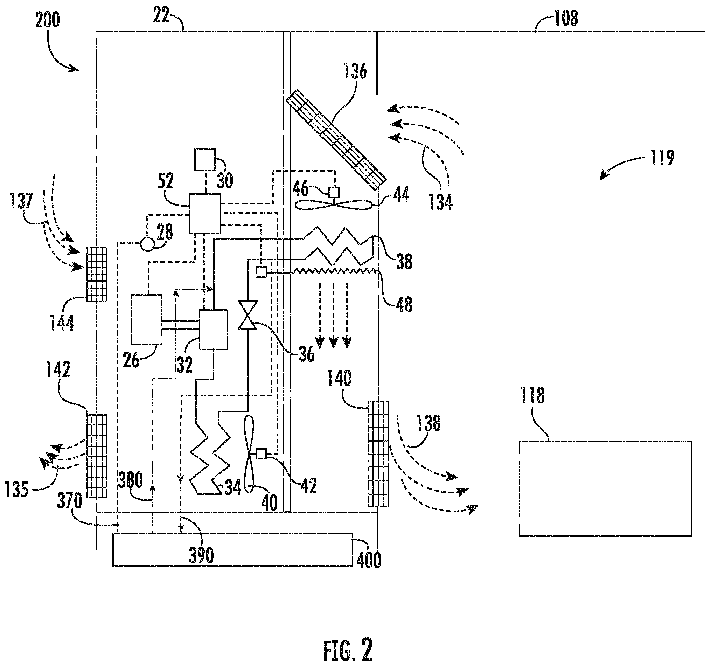

Referring to FIGS. 1 and 2, various embodiments of the present disclosure are illustrated. FIG. 1 shows a schematic illustration of a transport refrigeration system 200, according to an embodiment of the present disclosure. FIG. 2 shows an enlarged schematic illustration of the transport refrigeration system 200 of FIG. 1, according to an embodiment of the present disclosure.

The transport refrigeration system 200 is being illustrated as a truck or trailer system 100, as seen in FIG. 1. The trailer system 100 includes a vehicle 102 integrally connected to a transport container 106. The vehicle 102 includes an operator's compartment or cab 104 and a propulsion motor, which acts as the drive system of the truck or trailer system 100. The propulsion motor is configured to power the vehicle 102. The propulsion motor may be a combustion engine 320 that runs on a fuel, such as, compressed natural gas, liquefied natural gas, gasoline, diesel, or a combination thereof. The propulsion motor may be an electric motor 324 that runs on electricity from a truck energy storage device 326 (e.g., battery pack). The propulsion motor may also be a combination of the combustion engine 320 and the electric motor 324, such as, for example, a hybrid motor. It is understood that while both a combustion engine 320 and the electric motor 324 are illustrated in FIG. 1, the embodiments disclosed herein apply to a propulsion motor composed of the combustion engine 320 and/or the electric motor 324. The combustion engine 320 may be operably connected to a vehicle alternator 322 to generate electricity. The electricity generated by the vehicle alternator 322 may be utilized to charge the truck energy storage device 326.

The transport container 106 is coupled to the vehicle 102. The transport container 106 may be removably coupled to the vehicle 102. The transport container 106 is a refrigerated trailer and includes a top wall 108, a directly opposed bottom wall 110, opposed side walls 112, and a front wall 114, with the front wall 114 being closest to the vehicle 102. The transport container 106 further includes a door or doors 117 at a rear wall 116, opposite the front wall 114. The walls of the transport container 106 define a refrigerated cargo space 119. The refrigerated cargo space 119 may be subdivided into multiple different compartments that each have a different controlled environment (e.g., different temperature). It is appreciated by those of skill in the art that embodiments described herein may be applied to a tractor-trailer refrigerated system or non-trailer refrigeration such as, for example a rigid truck, a truck having refrigerated compartment.

Typically, transport refrigeration systems 200 are used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring temperature controlled transport. The transport refrigeration system 200 includes a transport refrigeration unit 22, a refrigerant compression device 32, an electric motor 26 for driving the refrigerant compression device 32, and a controller 30. The transport refrigeration unit 22 is in operative association with the refrigerated cargo space 119 and is configured to provide conditioned air to the transport container 106. The transport refrigeration unit 22 functions, under the control of the controller 30, to establish and regulate a desired environmental parameters, such as, for example temperature, pressure, humidity, carbon dioxide, ethylene, ozone, light exposure, vibration exposure, and other conditions in the refrigerated cargo space 119, as known to one of ordinary skill in the art. In an embodiment, the transport refrigeration unit 22 is capable of providing a desired temperature and humidity range.

The transport refrigeration unit 22 includes a refrigerant compression device 32, a refrigerant heat rejection heat exchanger 34 (e.g., condenser), an expansion device 36, and a refrigerant heat absorption heat exchanger 38 (e.g., evaporator) connected in refrigerant flow communication in a closed loop refrigerant circuit and arranged in a conventional refrigeration cycle. The transport refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transport refrigeration unit 22 may also include a heater 48 associated with the refrigerant heat absorption heat exchanger 38. In an embodiment, the heater 48 may be an electric resistance heater. It is to be understood that other components (not shown) may be incorporated into the refrigerant circuit as desired, including for example, but not limited to, a suction modulation valve, a receiver, a filter/dryer, an economizer circuit. It is also to be understood that additional refrigeration circuits may be run in parallel and powered by an AC battery pack 400 as desired.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transport refrigeration unit 22 is operating in a subcritical refrigerant cycle or as a refrigerant gas cooler, such as if the transport refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from a return air intake 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat absorption heat exchanger 38 is supplied back to the refrigerated cargo space 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

Airflow is circulated into and through the refrigerated cargo space 119 of the transport container 106 by means of the transport refrigeration unit 22. A return airflow 134 flows into the transport refrigeration unit 22 from the refrigerated cargo space 119 through the return air intake 136, and across the refrigerant heat absorption heat exchanger 38 via the fan 44, thus conditioning the return airflow 134 to a selected or predetermined temperature. The conditioned return airflow 134, now referred to as supply airflow 138, is supplied into the refrigerated cargo space 119 of the transport container 106 through the refrigeration unit outlet 140. Heat 135 is removed from the refrigerant heat rejection heat exchanger 34 through the heat outlet 142. The transport refrigeration unit 22 may contain an external air inlet 144, as shown in FIG. 2, to aid in the removal of heat 135 from the refrigerant heat rejection heat exchanger 34 by pulling in external air 137. The supply airflow 138 may cool the perishable goods 118 in the refrigerated cargo space 119 of the transport container 106. It is to be appreciated that the transport refrigeration unit 22 can further be operated in reverse to warm the transport container 106 when, for example, the outside temperature is very low. In the illustrated embodiment, the return air intake 136, the refrigeration unit outlet 140, the heat outlet 142, and the external air inlet 144 are configured as grilles to help prevent foreign objects from entering the transport refrigeration unit 22.

The transport refrigeration system 200 also includes a controller 30 configured for controlling the operation of the transport refrigeration system 200 including, but not limited to, the operation of various components of the transport refrigeration unit 22 to provide and maintain a desired thermal environment within the refrigerated cargo space 119. The controller 30 may also be able to selectively operate the electric motor 26. The controller 30 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

The transport refrigeration unit 22 is powered by the AC battery pack 400, which provides electrical energy to the transport refrigeration unit 22. The AC battery pack 400 may include a battery system, which may employ multiple batteries organized into multiple phase groups. In one embodiment, the AC battery pack 400 may provide electrical energy to the transport refrigeration unit 22 and the electric motor 324 of the vehicle 102. In another embodiment, the AC battery pack 400 may provide electrical energy solely to the transport refrigeration unit 22, while the propulsion motor (e.g., the electric motor 324 and/or the combustion engine 320) of the vehicle 102 receives electrical energy from another source (e.g., the truck energy storage device 326.

The AC battery pack 400 may be charged by a stationary charging station 386 The charging station 386 may provide single phase (e.g., level 2 charging capability) or three phase alternating current (AC) energy to the AC battery pack 400. It is understood that the charging station 386 may have any phase charging and embodiments disclosed herein are not limited to single phase or three phase AC power. In an embodiment, the charging station may be a DC charging station that provides high voltage DC power, such as, for example, between 200 to 900 VDC.

The transport refrigeration unit 22 has a plurality of electrical power demand loads on the AC battery pack 400, including, but not limited to, the electric motor 26 for the refrigerant compression device 32, the fan motor 42 for the fan 40 associated with the refrigerant heat rejection heat exchanger 34, and the fan motor 46 for the fan 44 associated with the refrigerant heat absorption heat exchanger 38. It is to be understood that, while not required, various power converters 52, such as, for example, AC-to-DC rectifiers, DC-to-AC inverters, AC-to-AC voltage/frequency converters, and DC-to-DC voltage converters, may be employed in connection with the AC battery pack 400 as appropriate. In an embodiment, each of the fan motors 42, 46 and the electric motor 26 may be an AC motor.

In the depicted embodiment, the heater 48 also constitutes an electrical power demand load. The electric resistance heater 48 may be selectively operated by the controller 30 whenever a control temperature within the temperature controlled cargo box drops below a preset lower temperature limit, which may occur in a cold ambient environment. In such an event the controller 30 would activate the heater 48 to heat air circulated over the heater 48 by the fan(s) 44 associated with the refrigerant heat absorption heat exchanger 38. The heater 48 may also be used to de-ice the return air intake 136. Additionally, the electric motor 26 being used to power the refrigerant compression device 32 also constitutes a demand load. The refrigerant compression device 32 may comprise a single-stage or multiple-stage compressor such as, for example, a reciprocating compressor or a scroll compressor. The transport refrigeration system 200 may also include a voltage sensor 28 to sense the voltage from the AC battery pack 400.

The AC battery pack 400 is electrically connected to the transport refrigeration unit 22 through an electrical connector 370. The AC battery pack 400 is thermally connected to the transport refrigeration unit 22 through coolant. Coolant may flow from the transport refrigeration unit 22 to the AC battery pack 400 through a coolant inlet passage 390 and coolant may flow from the AC battery pack 400 to the transport refrigeration unit 22 through a coolant outlet passage 380. In one embodiment, the coolant inlet passage 390 may be configured to receive coolant from a location upstream of or before the refrigerant heat absorption heat exchanger 38 (e.g., evaporator and the coolant outlet passage 380 may be configured to deliver the coolant to a location downstream of or after the refrigerant heat absorption heat exchanger 38 (e.g., evaporator). The coolant is utilized to regulate the temperature of the AC battery pack 400. In an embodiment, the coolant is used to cool or reduce a temperature of the AC battery pack 400.

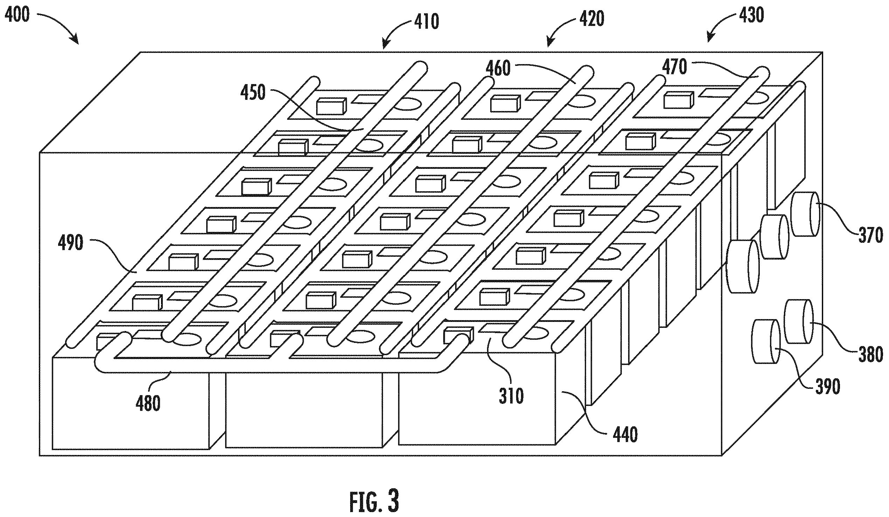

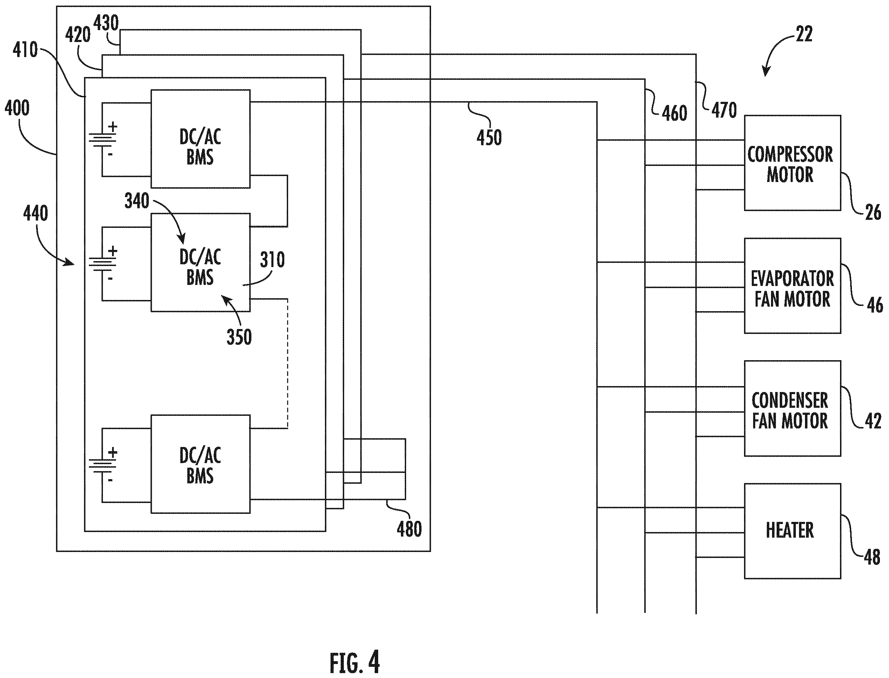

Referring now to FIGS. 3 and 4, with continued reference to FIGS. 1 and 2, FIG. 3 illustrates an isometric view the AC battery pack 400 and FIG. 4 illustrates a schematic wiring diagram of the AC battery pack 400, according to an embodiment of the present disclosure.

The AC battery pack 400 includes a plurality of battery modules 440 configured to store DC electricity. The plurality of battery modules 440 are organized in phase groups 410, 420, 430, which includes a first phase group 410, a second phase group 420, and a third phase group 430. The first phase group 410 includes a first plurality of battery modules 440 electrically connected in series via a first electrical bus bar 450. As shown in FIG. 3, first phase group 410 may include seven battery modules 440 but it is understood that the first phase group 410 may include any number of battery modules 440. The second phase group 420 includes a second plurality of battery modules 440 electrically connected in series via a second electrical bus bar 460. As shown in FIG. 3, second phase group 420 may include seven battery modules 440 but it is understood that the second phase group 420 may include any number of battery modules 440. The third phase group 430 includes a third plurality of battery modules 440 electrically connected in series via a third electrical bus bar 470. As shown in FIG. 3, third phase group 430 may include seven battery modules 440 but it is understood that the third phase group 430 may include any number of battery modules 440. The first phase group 410 is configured to provide AC electricity in a first phase, the second phase group 420 is configured to provide AC electricity in a second phase, and the third phase group 430 is configured to provide AC electricity in a third phase.

The first electrical bus bar 450, the second electrical bus bar 460, and the third electrical bus bar 470 are electrically connected to the connector 370 to form a three phase output for transport refrigeration unit 22. The bus bar 480 is formed as the neutral point of the three phase system consisting of the first phase group 410, the second phase group 420, and the third phase group 430.

The battery module 440 may be a lithium ion battery, a solid state battery, a flow battery, a fuel cell, or any other battery known to one of skill in the art. Each battery module 440 includes battery management module 310 that is co-located with its respective battery module 440 within the AC battery pack 400. Co-located may be defined as in the same location, proximate, next-to, or attached to. Advantageously, being co-located allows cooling to be directed to the area of colocation and simultaneously cool both the battery module 440 and the battery management module 310.

It should be appreciated that, although particular components of the battery management module 310 are separately defined in the schematic block diagram of FIGS. 3 and 4, each or any of the components may be otherwise combined or separated via hardware and/or software. In an embodiment, the battery management module 310 may be a computer program product (e.g., software) encoded within controller 30.

In another embodiment, the battery management module 310 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

Each battery module 440 of the first plurality of battery modules 440, the second plurality of battery modules 440, and the third plurality of battery modules 440, respectively, includes a battery management module 440 including a DC-to-AC inverter 340 configured to convert the DC electricity to the AC electricity and a battery management system 350 configured to control output of the AC electricity from the first DC-to-AC inverter 340 to the transport refrigeration unit 22.

Each battery module 440 is electrically connected to its respective bus bar through the battery management module 310. The battery management module 310 includes a DC-to-AC inverter 340 and a battery management system 350. The DC-to-AC inverter 340 is configured to convert the DC electricity from the battery module from to AC electricity that is useable by various electrical loads of the transport refrigeration unit 22 including but not limited to the electric motor 26 of the refrigerant compression device 32, the fan motor 46 of the refrigerant heat absorption heat exchanger 38 (e.g., evaporator), the fan motor 42 of the refrigerant heat rejection heat exchanger 34 (e.g., condenser), and the heater 48.

A battery management system 350 is configured to control the output of the AC electricity from the DC-to-AC inverter 340 to the transport refrigeration unit 22. The battery management system 350 may be configured to control the output of the AC electricity from the DC-to-AC inverter 340 to the transport refrigeration unit 22 in response to transport refrigeration unit parameters. The transport refrigeration unit parameters may include but are not limited to set point, ambient temperature, delta T° between the temperature in the refrigerated cargo space 119 and the temperature set point of the transport refrigeration unit 22, airflow rate into or out of the transport container 106, cooling capacity, temperature homogeneity in the transport container 106, doors 117 opening situation... etc. Transport refrigeration unit parameters, such as delta T° may be important because a high delta T° may indicate that an increase energy is required for pull down or pull up. The battery management system 350 may be configured to control and/or adjust energy output of the DC-to-AC inverter 340 in response the energy output of other DC-to-AC inverters 340 within the same phase group 410, 420, 420. For example, the battery management systems 350 within the first phase group 410 may be in communication with each other, the battery management systems 350 within the second phase group 420 may be in communication with each other, and the battery management systems 350 within the third phase group 430 may be in communication with each other.

The AC battery pack may also include a coolant circulation system 490 configured to circulate coolant from the transport refrigeration unit 22 throughout the AC battery pack 400. The coolant circulation system 490 may be in thermal communication with the battery management module 310 of each battery module 440 and/or the battery module 440 itself. The coolant circulation system 490 is configured to remove heat from the battery management module 310 of each battery module 440 and/or the battery module 440 itself. The coolant circulation system 490 is fluidly connected to the coolant outlet passage 380 and the coolant inlet passage 390. The coolant circulation system 490 is configured to receive coolant from the transport refrigeration unit 22 from the coolant inlet passage 390 and send coolant back to the transport refrigeration unit 22 through the coolant outlet passage 380. The coolant inlet passage 390 may be connected to a location upstream of or before the refrigerant heat absorption heat exchanger 38 (e.g., evaporator), and the coolant outlet passage 380 may be connected to a location downstream of or after the refrigerant heat absorption heat exchanger 38 (e.g., evaporator).

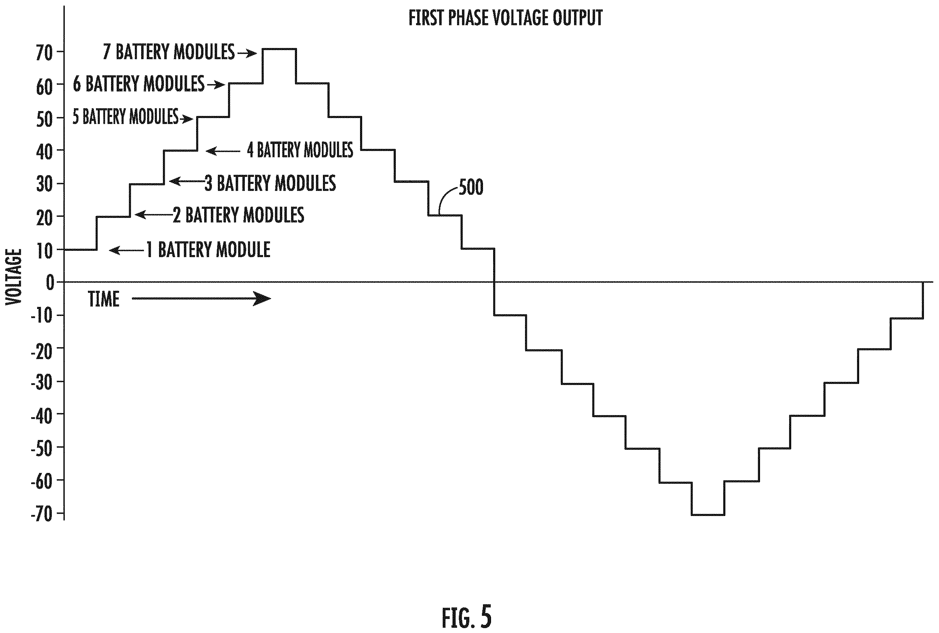

Referring to FIG. 5, with continued reference to FIGS. 1-4, an example of a voltage output 500 generated by the first phase group 410 is illustrated in accordance to an embodiment of the present disclosure. It is understood that similar outputs may be generated by the second phase group 420 and the third phase group 430 and offset by an electrical-degree phase shift from the voltage output 500 of the first phase group 410.

Since the battery modules 440 are arranged in series the voltages will be summated and the first phase group 410 can produce a voltage output that is a stair step sinusoidal curve by appropriately timing the voltage output of each battery module 440. The stair step sine wave is composed entirely of linear segments and has no curvilinear segments. Advantageously, this stair step sine wave will have largely the same effect as a smooth sinusoidal curve without the need for a big sine filter.

In the example shown in FIG. 5, the first phase group 410 includes seven battery module 440 and each battery module 440 has a voltage of 10 volts. Thus, in order to have 10 volts then voltage is pulled from one battery module 440, in order to have 20 volts then voltage is pulled from two battery modules 440, in order to have 30 volts then voltage is pulled from three battery modules 440, in order to have 40 volts then voltage is pulled from four battery modules 440, in order to have 50 volts then voltage is pulled from five battery modules 440, in order to have 60 volts then voltage is pulled from six battery modules 440, and in order to have 70 volts then voltage is pulled from seven battery modules 440. It is understood that while the battery modules 440 are described as each having a voltage of 10V, the embodiments disclosed herein may be applicable to battery modules having any voltage.

The battery management module 310 of each battery module 440 may be in communication with the battery management module 310 of all of the other battery modules 340 to coordinate the operation of the DC-to-AC inverters 340 in order to properly generate the stair step sine wave. The communication between the battery management modules 310 may be limited to communication within a single phase group 410, 420, 430 or the communication between the battery management modules 310 may be extend to communication across different phase groups 410, 420, 430

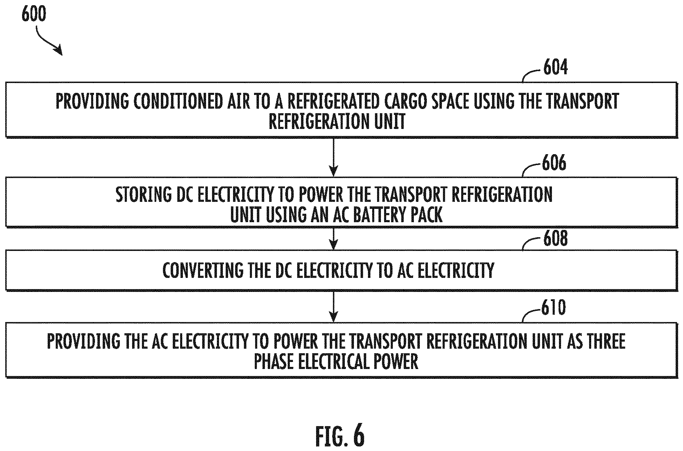

Referring now to FIG. 6, with continued reference to FIGS. 1-5. FIG. 6 shows a flow process illustrating a method 600 of operating a transport refrigeration unit 22, according to an embodiment of the present disclosure.

At block 604, conditioned air is provided to a refrigerated cargo space 119 using the transport refrigeration unit 22. At block 606, DC electricity to power the transport refrigeration unit 22 is stored using an AC battery pack 400. At block 608, the DC electricity is converted to AC electricity. At block 610, the AC electricity is provided to power the transport refrigeration unit 22 as three phase electrical power.

The AC battery pack includes a first phase group 410 including a first plurality of battery modules 440. The first phase group being configured to provide AC electricity in a first phase.

The AC battery pack 400 includes a second phase group 420 comprising a second plurality of battery modules 440. The second phase group 420 being configured to provide AC electricity in a second phase.

The AC battery pack 400 includes a third phase group 430 comprising a third plurality of battery modules 440. The third phase group 430 being configured to provide AC electricity in a third phase. The first phase, the second phase, and the third phase are each shaped as a stair step sine wave.

The method 600 may further include that heat is removed from at least one battery management module 440 using coolant from the transport refrigeration unit 22.

While the above description has described the flow process of FIG. 6 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media, such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A transport refrigeration unit (22) configured to provide conditioned air to a refrigerated cargo space, the transport refrigeration unit (22) comprising:
an AC battery pack (400) configured to store DC electricity and convert the DC electricity to AC electricity and provide the AC electricity to power the transport refrigeration unit (22) as three phase electrical power, the AC battery pack (400) comprises:
a first phase group (410) comprising a first plurality of battery modules (440), the first phase group (410) being configured to provide the AC electricity in a first phase;
a second phase group (420) comprising a second plurality of battery modules (440), the second phase group (420) being configured to provide the AC electricity in a second phase; and
a third phase group (430) comprising a third plurality of battery modules (440), the third phase group (430) being configured to provide the AC electricity in a third phase,
wherein the first phase, the second phase, and the third phase are each shaped as a stair step sine wave.

2. The transport refrigeration unit (22) of claim 1, wherein each battery module (440) of at least one or all of the first plurality of battery modules (440), the second plurality of battery modules (440), and the third plurality of battery modules (440), respectively, comprise a battery management module (310) comprising:
a DC-to-AC inverter (340) configured to convert the DC electricity to the AC electricity; and
a battery management system (350) configured to control output of the AC electricity from the DC-to-AC inverter (340) to the transport refrigeration unit (22).

3. The transport refrigeration unit (22) of claim 2, further comprising:
a coolant circulation system (490) in thermal communication with at least one battery management module (310) or battery management modules (310), wherein the coolant circulation system (490) is configured to remove heat from the at least one battery management module (310) or battery management modules (310) using coolant from the transport refrigeration unit (22); and
wherein optionally the coolant circulation system (490) is in thermal communication with each battery module (440) of the first plurality of battery modules (440), each battery module (440) of the second plurality of battery modules (440), and each battery module (440) of the third plurality of battery modules (440).

4. The transport refrigeration unit (22) of claim 2 or 3, wherein each battery management module (310) is co-located with its respective battery module (440) or modules (440) within the AC battery pack (400).

5. The transport refrigeration unit (22) of any preceding claim, wherein the first plurality of battery modules (440) are connected to each other in series; and optionally wherein the second plurality of battery modules (440) are connected to each other in series and the third plurality of battery modules (440) are connected to each other in series.

6. An AC battery pack (400) configured to store DC electricity and convert the DC electricity to AC electricity and provide the AC electricity to at least one load as three phase electrical power, the AC battery pack (400) comprising:
a first phase group (410) comprising a first plurality of battery modules (440), the first phase group (410) being configured to provide the AC electricity in a first phase;
a second phase group (420) comprising a second plurality of battery modules (440), the second phase group (420) being configured to provide the AC electricity in a second phase; and
a third phase group (430) comprising a third plurality of battery modules (440), the third phase group (430) being configured to provide the AC electricity in a third phase,
wherein the first phase, the second phase, and the third phase are each shaped as a stair step sine wave.

7. The AC battery pack (400) of claim 6, wherein each battery module (440) of at least one of the first plurality of battery modules (440), the second plurality of battery modules (440), and the third plurality of battery modules (440), respectively, comprise a battery management module (310) comprising:
a DC-to-AC inverter (340) configured to convert the DC electricity to the AC electricity; and
a battery management system (350) configured to control output of the AC electricity from a DC-to-AC inverter (340) to a transport refrigeration unit (22).

8. The AC battery pack (400) of claim 7, further comprising:
a coolant circulation system (490) in thermal communication with at least one battery management module (310), wherein the coolant circulation system (490) is configured to remove heat from the at least one battery management module (310) using a coolant.

9. The AC battery pack (400) of claim 8, wherein the coolant circulation system (490) is in thermal communication with each battery module (440) of the first plurality of battery modules (440), each battery module (440) of the second plurality of battery modules (440), and each battery module (440) of the third plurality of battery modules (440).

10. The AC battery pack (400) of any of claims 7-9, wherein each battery management module (310) is co-located with its respective battery module (440) within the AC battery pack (400).

11. The AC battery pack (400) of any of claims 6-10, wherein the first plurality of battery modules (440) are connected to each other in series, the second plurality of battery modules (440) are connected to each other in series, and the third plurality of battery modules (440) are connected to each other in series.

12. A method (600) of operating a transport refrigeration unit (22), the method comprising:
providing (604) conditioned air to a refrigerated cargo space (119) using the transport refrigeration unit (22);
storing (606) DC electricity to power the transport refrigeration unit (22) using an AC battery pack (400);
converting (608) the DC electricity to AC electricity; and
providing (610) the AC electricity to power the transport refrigeration unit (22) as three phase electrical power, the AC battery pack (400) comprises:
a first phase group (410) comprising a first plurality of battery modules (440), the first phase group (410) being configured to provide the AC electricity in a first phase;
a second phase group (420) comprising a second plurality of battery modules (440), the second phase group (420) being configured to provide the AC electricity in a second phase; and
a third phase group (430) comprising a third plurality of battery modules (440), the third phase group (430) being configured to provide the AC electricity in a third phase,
wherein the first phase, the second phase, and the third phase are each shaped as a stair step sine wave.

13. The method (600) of claim 12, wherein each battery module (440) of at least one of the first plurality of battery modules (440), the second plurality of battery modules (440), and the third plurality of battery modules (440), respectively, comprise a battery management module (310) comprising:
a DC-to-AC inverter (340) configured to convert the DC electricity to the AC electricity; and
a battery management system (350) configured to control output of the AC electricity from the DC-to-AC inverter (340) to the transport refrigeration unit (22).

14. The method (600) of claim 13, further comprising:
removing heat from at least one battery management module (310) using coolant from the transport refrigeration unit (22).
